# EUROPEAN PATENT APPLICATION

(11) **EP 4 322 671 A1**
(43) Date of publication of application: **14.02.2024**
(21) Application number: 21935526.0
(22) Date of filing: 06.04.2021
(51) Int. Cl.: H04W 72/12

(54) **METHOD AND APPARATUS FOR DETERMINING TIME DOMAIN RESOURCE**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2021/085743
(87) International publication number: WO 2022/213290

(57) **Abstract**

The embodiments of the present disclosure disclose a method and apparatus for determining a time domain resource, and can be applied to the technical field of communications. The method, configured to be executed by a terminal device, comprises: receiving first indication information, the first indication information being used for indicating a plurality of non-continuous time units; and on the basis of the first indication information, determining at least one among a start location and an end location corresponding to each time unit among the plurality of non-continuous time units. Therefore, the terminal device can determine the locations of a plurality of non-continuous time units by using the first indication information, thereby effectively reducing the transmission of control signaling, saving resources, and improving efficiency.

## Description

### TECHNICAL FIELD

The present disclosure relates to the field of communication technologies, and in particular, to a method and an apparatus for determining time domain resources.

### BACKGROUND

In a communication system, for an unlicensed spectrum, before sending data, a device needs to perform channel sensing on the unlicensed spectrum. When it senses that the channel is idle, it can determine a channel occupancy time, and before the channel occupancy time expires, data can be transmitted on the unlicensed spectrum. After the channel occupation time ends, it senses again whether the channel is idle.

Since the channel occupation time is limited, in order to save control signaling, in the related art, it is proposed that one piece of downlink control information (DCI) can be configured to schedule multiple continuous downlink slots, or one DCI can be configured to schedule multiple continuous uplink slots. However, how to use one DCI signaling to schedule multiple non-continuous downlink slots, or one DCI to schedule multiple non-continuous uplink slots to realize the indication of time domain resources is an urgent problem to be solved at present.

### SUMMARY

The embodiments of the present disclosure provide a method and a device for determining a time domain resource, which can be applied in the field of communication technologies.

In a first aspect, embodiments of the present disclosure provide a method for determining time domain resources. The method is configured to be performed by a terminal device, and includes: receiving first indication information, in which the first indication information is configured to indicate a plurality of non-continuous time units; determining, based on the first indication information, at least one of a start position and an end position corresponding to each time unit of the plurality of non-continuous time units.

In this solution, the terminal device first receives the first indication information, and then determines at least one of the start position and the end position corresponding to each time unit in the plurality of non-continuous time units based on the first indication information. Thus, the terminal device can determine the positions of the plurality of non-continuous time units through the first indication information, thereby effectively reducing the transmission of control signaling, saving resources, and improving efficiency.

Optionally, the method further includes: receiving second indication information, in which the second indication information is configured to indicate types of the plurality of non-continuous time units.

Optionally, the time unit is at least one of: a slot, a mini-slot, a symbol or a subframe.

Optionally, the method further includes: performing communication transmission over the plurality of non-continuous time units.

Optionally, performing communication transmission over the plurality of non-continuous time units, includes:
in response to the plurality of non-continuous time units being uplink time units and/or flexible time units, performing physical uplink shared channel PUSCH data transmission over the plurality of non-continuous time units;
   or,
in response to the plurality of non-continuous time units being downlink time units and/or flexible time units, performing physical downlink shared channel PDSCH data transmission over the plurality of non-continuous time units.

Optionally, the first indication information is downlink control information DCI.

Optionally, the method further includes: determining a plurality of time intervals for the plurality of non-continuous time units according to the first indication information.

Optionally, the number of the plurality of time intervals is M, and M is an integer, in which a first time interval is configured to indicate a time interval between a first time unit and the first indication information, and an ith time interval is configured to indicate a time interval between an i-1th time unit and an ith time unit, in which i is an integer greater than 1 and less than or equal to M.

Optionally, the method further includes: determining a plurality of time intervals for a plurality of non-continuous time unit groups according to the first indication information, in which each of the time unit groups includes a plurality of continuous time units.

Optionally, the method further includes: determining the number x of time units included in each time unit group according to third indication information and/or according to first preconfigured information.

Optionally, the number x of time units included in each time unit group is the same.

Optionally, the number x of time units included in each time unit group is greater than or equal to a first threshold.

Optionally, the number of the plurality of time intervals is N, and N is an integer.
a first time interval is configured to indicate a time interval between a first time unit group and the first indication information, and an ith time interval is configured to indicate a time interval between an i-1th time unit group and an ith time unit group, in which i is an integer greater than 1 and less than or equal to N.

Optionally, the number of the plurality of non-continuous time unit groups is less than or equal to a second threshold.

Optionally, the method further includes: determining whether each time unit in a specified time unit segment is allocated to the terminal device according to the first indication information, in which the specified time unit segment includes the plurality of non-continuous time units.

Optionally, the specified time unit segment includes a plurality of continuous time units, and the method further includes:
determining the number of the plurality of continuous time units according to fourth indication information and/or according to second pre-configured information.

Optionally, the number of the plurality of continuous time units is less than or equal to a third threshold.

Optionally, the method further includes: determining a time interval between a first time unit in the time unit segment and the first indication information according to the first indication information.

Optionally, the number of the plurality of non-continuous time units indicated by the first indication information is less than or equal to a fourth threshold.

In a second aspect, embodiments of the present disclosure provide another method for determining time domain resources. The method is configured to be performed by a network device, and the method includes: sending first indication information, in which the first indication information is configured to indicate a plurality of non-continuous time units.

Optionally, the method further includes: sending second indication information, in which the second indication information is configured to indicate types of the plurality of non-continuous time units.

Optionally, the time unit is at least one of: a slot, a mini-slot, a symbol, or a subframe:

Optionally, the method further includes: performing communication transmission over the plurality of non-continuous time units.

Optionally, performing communication transmission over the plurality of non-continuous time units, includes:
in response to the plurality of non-continuous time units being uplink time units and/or flexible time units, performing physical uplink shared channel PUSCH data transmission over the plurality of non-continuous time units;
   or,
in response to the plurality of non-continuous time units being downlink time units and/or flexible time units, performing physical downlink shared channel PDSCH data transmission over the plurality of non-continuous time units.

Optionally, the first indication information is downlink control information DCI.

Optionally, the method further includes: determining a plurality of time intervals for the plurality of non-continuous time units according to the first indication information.

Optionally, the number of the plurality of time intervals is M, and M is an integer, in which a first time interval is configured to indicate a time interval between a first time unit and the first indication information, and an ith time interval is configured to indicate a time interval between an i-1th time unit and an ith time unit, in which i is an integer greater than 1 and less than or equal to M.

Optionally, the method further includes: indicating a plurality of time intervals for a plurality of non-continuous time unit groups through the first indication information, in which each of the time unit groups includes a plurality of continuous time units.

Optionally, the method further includes: sending third indication information, in which the third indication information is configured to indicate the number x of time units included in each time unit group.

Optionally, the number x of time units included in each time unit groups is the same.

Optionally, the number x of time units included in each time unit group is greater than or equal to a first threshold.

Optionally, the number of the plurality of time intervals is N, and N is an integer.

A first time interval is configured to indicate a time interval between a first time unit group and the first indication information, and an ith time interval is configured to indicate a time interval between an i-1th time unit group and an ith time unit group, in which i is an integer greater than 1 and less than or equal to N.

Optionally, the number of the plurality of non-continuous time unit groups is less than or equal to a second threshold.

Optionally, the method further includes: indicating whether each time unit in a specified time unit segment is allocated to a terminal device through the first indication information, in which the specified time unit segment includes the plurality of non-continuous time units.

Optionally, the specified time unit segment includes a plurality of continuous time units, and the method further includes:
sending fourth indication information, in which the fourth indication information is configured to indicate the number of the plurality of continuous time units.

Optionally, the number of the plurality of continuous time units is less than or equal to a third threshold.

Optionally, the method further includes: indicating a time interval between a first time unit in the time unit segment and the first indication information through the first indication information.

Optionally, the number of plurality of non-continuous time units indicated by the first indication information is less than or equal to a fourth threshold.

In a third aspect, embodiments of the present disclosure provide a communication apparatus. The apparatus is configured in a terminal device, and includes: a transceiver module, configured to receive first indication information, in which the first indication information is configured to indicate a plurality of non-continuous time units; and a processing module, configured to determine at least one of a start position and an end position corresponding to each time unit of the plurality of non-continuous time units based on the first indication information.

Optionally, the transceiver module is further configured to receive second indication information, in which the second indication information is configured to indicate types of the plurality of non-continuous time units.

Optionally, the time unit is at least one of: a slot, a mini-slot, a symbol or a subframe.

Optionally, the transceiver module is further configured to perform communication transmission over the plurality of non-continuous time units.

Optionally, the transceiver module is specifically configured to:
in response to the plurality of non-continuous time units being uplink time units and/or flexible time units, perform physical uplink shared channel PUSCH data transmission ovre the plurality of non-continuous time units;
   or,
in response to the plurality of non-continuous time units being downlink time units and/or flexible time units, perform physical downlink shared channel PDSCH data transmission over the plurality of non-continuous time units.

Optionally, the first indication information is downlink control information DCI.

Optionally, the processing module is further configured to determine, according to the first indication information, a plurality of time intervals for the plurality of non-continuous time units.

Optionally, the number of the multiple time intervals is M, where M is an integer. A first time interval is configured to indicate a time interval between a first time unit and the first indication information. An ith time interval is configured to indicate a time interval between an i-1th time unit and an ith time unit, where i is an integer greater than 1 and less than or equal to M.

Optionally, the processing module is further configured to determine, according to the first indication information, multiple time intervals between multiple non-continuous time unit groups, in which each of the time unit groups includes multiple continuous time unit groups, time unit.

Optionally, the processing module is further configured to determine the number x of time units included in each time unit group according to third indication information and/or according to first pre-configured information.

Optionally, the number x of time units included in each time unit group is the same.

Optionally, the number x of time units included in each time unit group is greater than or equal to a first threshold.

Optionally, the number of the plurality of time intervals is N, and N is an integer. A first time interval is configured to indicate a time interval between a first time unit group and the first indication information. An ith time interval is configured to indicate a time interval between an i-1th time unit group and an ith time unit group, where i is an integer greater than 1 and less than or equal to N.

Optionally, the number of the plurality of non-continuous time unit groups is less than or equal to a second threshold.

Optionally, the processing module is further configured to determine whether each time unit in a specified time unit segment is allocated to the terminal device according to the first indication information, in which the specified time unit segment includes the plurality of non-continuous time units.

Optionally, the specified time unit segment includes a plurality of continuous time units, and the processing module is further configured to determine the number of the plurality of continuous time units according to fourth indication information and/or according to second preconfigured information.

Optionally, the number of the plurality of continuous time units is less than or equal to a third threshold.

Optionally, the processing module is further configured to determine, according to the first indication information, a time interval between a first time unit in the time unit segment and the first indication information.

Optionally, the number of the plurality of non-continuous time units indicated by the first indication information is less than or equal to a fourth threshold.

In a fourth aspect, embodiments of the present disclosure provide another communication apparatus. The apparatus is configured in a network device, and includes: a transceiver module configured to send first indication information, in which the first indication information is configured to indicate a plurality of non-continuous time units.

Optionally, the transceiver module is further configured to send second indication information to the terminal device, in which the second indication information is configured to indicate types of the plurality of non-continuous time units.

Optionally, the time unit is at least one of: a slot, a mini-slot, a symbol or a subframe.

Optionally, the transceiver module is further configured to perform communication transmission with the terminal device over the plurality of non-continuous time units.

Optionally, the transceiver module is specifically configured to:
in response to the plurality of non-continuous time units being uplink time units and/or flexible time units, perform PUSCH data transmission with the terminal device over the plurality of non-continuous time units;
   or,
in response to the plurality of non-continuous time units being downlink time units and/or flexible time units, perform PDSCH data transmission with the terminal device over the plurality of non-continuous time units.

Optionally, the first indication information is downlink control information DCI.

Optionally, the transceiver module is further configured to indicate to the terminal device a plurality of time intervals for the plurality of non-continuous time units through the first indication information.

Optionally, the number of the plurality of time intervals is M, and M is an integer. A first time interval is configured to indicate a time interval between a first time unit and the first indication information. An ith time interval is configured to indicate a time interval between an i-1th time unit and an ith time unit, in which i is an integer greater than 1 and less than or equal to M.

Optionally, the transceiver module is further configured to indicate to the terminal device a plurality of time intervals for a plurality of non-continuous time unit groups through the first indication information, in which each of the time unit groups includes multiple a plurality of continuous time units.

Optionally, the transceiver module is further configured to send third indication information to the terminal device, in which the third indication information is configured to indicate to the terminal device the number x of time units included in each time unit group.

Optionally, the number x of time units included in each time unit group is the same.

Optionally, the number x of time units included in each time unit group is greater than or equal to a first threshold.

Optionally, the number of the plurality of time intervals is N, and N is an integer. A first time interval is configured to indicate a time interval between a first time unit group and the first indication information. An ith time interval is configured to indicate a time interval between an i-1th time unit group and an ith time unit group, where i is an integer greater than 1 and less than or equal to N.

Optionally, the number of the plurality of non-continuous time unit groups is less than or equal to a second threshold.

Optionally, the transceiver module is further configured to indicate to the terminal device whether each time unit in a specified time unit segment is allocated to the terminal device through the first indication information, in which the specified time unit segment includes the plurality of non-continuous time units.

Optionally, the specified time unit segment includes a plurality of continuous time units, and the transceiver module is further configured to send fourth indication information to the terminal device, in which the fourth indication information is configured to indicate the number of the plurality of continuous time units.

Optionally, the number of the multiple continuous time units is less than or equal to a third threshold.

Optionally, the transceiver module is further configured to indicate to the terminal device a time interval between a first time unit in the time unit segment and the first indication information through the first indication information interval.

Optionally, the number of the plurality of non-continuous time units indicated by the first indication information is less than or equal to a fourth threshold.

In a fifth aspect, embodiments of the present disclosure provide a communication apparatus. The communication apparatus includes a processor, and when the processor calls a computer program in a memory, the method described in the first aspect is performed.

In a sixth aspect, embodiments of the present disclosure provide a communication apparatus, the communication apparatus includes a processor, and when the processor calls a computer program in a memory, the method described in the second aspect above is performed.

In a seventh aspect, embodiments of the present disclosure provide a communication apparatus. The communication apparatus includes a processor and a memory, and a computer program is stored in the memory. The processor executes the computer program stored in the memory, so that the communication apparatus perform the method described in the first aspect above.

In an eighth aspect, embodiments of the present disclosure provide a communication apparatus. The communication apparatus includes a processor and a memory, and a computer program is stored in the memory. The processor executes the computer program stored in the memory, so that the communication apparatus performs the method described in the second aspect above.

In a ninth aspect, embodiments of the present disclosure provide a communication apparatus. The apparatus includes a processor and an interface circuit, the interface circuit is configured to receive code instructions and transmit them to the processor, and the processor is configured to run the code instructions to make the apparatus performs the method described in the first aspect above.

In a tenth aspect, embodiments of the present disclosure provide a communication apparatus. The apparatus includes a processor and an interface circuit, the interface circuit is configured to receive code instructions and transmit them to the processor, and the processor is configured to run the code instructions to make the apparatus performs the method described in the second aspect above.

In an eleventh aspect, embodiments of the present disclosure provide a system for determining time domain resources. The system includes the communication apparatus described in the third aspect and the communication apparatus described in the fourth aspect, or the system includes the communication apparatus described in the fifth aspect and the communication apparatus described in the sixth aspect, or the system includes the communication apparatus described in the seventh aspect and the communication apparatus described in the eighth aspect, or the system includes the communication apparatus described in the ninth aspect and the communication apparatus described in the tenth aspect.

In a twelfth aspect, embodiments of the present disclosure provides a computer-readable storage medium configured to store instructions used by the above-mentioned terminal device, and when the instructions are executed, the terminal device is made to perform the above-mentioned method in the first aspect.

In a thirteenth aspect, embodiments of the present disclosure provide a computer-readable storage medium configured to store instructions used by the above-mentioned network device, and when the instructions are executed, the network device is made to perform the above-mentioned method in the second aspect.

In a fourteenth aspect, the present invention provide also provides a computer program product including a computer program, which, when run on a computer, causes the computer to perform the method described in the first aspect above.

In a fifteenth aspect, the present disclosure also provides a computer program product including a computer program, which, when run on a computer, causes the computer to perform the method described in the second aspect above.

In a sixteenth aspect, the present disclosure provides a chip system. The chip system includes at least one processor and an interface, and is configured to support a terminal device to implement the functions involved in the first aspect, for example, determining or processing at least one of data and information involved in the above method. In a possible design, the chip system further includes a memory configured to store necessary computer programs and data of the terminal device. The chip system may be composed of chips, or may include chips and other discrete components.

In a seventeenth aspect, the present disclosure provides a chip system. The chip system includes at least one processor and an interface, and is configure to support a network device to implement the functions involved in the second aspect, for example, determining or processing at least one of data and information involved in the above method. In a possible design, the chip system further includes a memory configured to store necessary computer programs and data of the network device. The chip system may be composed of chips, or may include chips and other discrete devices.

In an eighteenth aspect, the present disclosure provides a computer program that, when run on a computer, causes the computer to execute the method described in the first aspect above.

In a nineteenth aspect, the present disclosure provides a computer program that, when executed on a computer, causes the computer to execute the method described in the second aspect above.

### BRIEF DESCRIPTION OF THE DRAWINGS

In order to more clearly illustrate the technical solutions in embodiments of the present disclosure or the background technology, the accompanying drawings required in the embodiments or the background technology of the present disclosure will be described below.
FIG. 1 is a schematic diagram of an architecture of a communication system provided by embodiments of the present disclosure.
FIG. 2 is a schematic flowchart of a method for determining time domain resources provided by an embodiment of the present disclosure.
FIG. 3 is a schematic flowchart of a method for determining time domain resources provided by another embodiment of the present disclosure.
FIG. 4 is a schematic flowchart of a method for determining time domain resources provided by another embodiment of the present disclosure.
FIG. 5 is a schematic flowchart of a method for determining time domain resources provided by another embodiment of the present disclosure.
FIG. 6 is a schematic flowchart of a method for determining time domain resources provided by another embodiment of the present disclosure.
FIG. 7 is a schematic flowchart of a method for determining time domain resources provided by another embodiment of the present disclosure.
FIG. 8 is a schematic flowchart of a method for determining time domain resources provided by another embodiment of the present disclosure.
FIG. 9 is a schematic flowchart of a method for determining time domain resources provided by another embodiment of the present disclosure.
FIG. 10 is a schematic flowchart of a method for determining time domain resources provided by another embodiment of the present disclosure.
FIG. 11 is a schematic structural diagram of a communication apparatus according to an embodiment of the present disclosure.
FIG. 12 is a schematic structural diagram of a communication apparatus according to another embodiment of the present disclosure.
FIG. 13 is a schematic structural diagram of a communication apparatus according to another embodiment of the present disclosure.
FIG. 14 is a schematic structural diagram of a chip according to an embodiment of the present disclosure.

### DETAILED DESCRIPTION

For ease of understanding, terms involved in the present disclosure are first introduced.

### 1. Downlink control information (DCI)

The DCI may include uplink and downlink resource allocation, hybrid automatic repeat request (HARQ) information, power control, etc.

### 2. Subframe

In a communication system, time domain resources may be continuously numbered according to a system frame number (SFN) with a granularity of 10 milliseconds (ms). One SFN may include 10 subframes, and each subframe is 1 ms in length. One subframe may be further divided into several slots (slots), and a specific number depends on a subcarrier spacing.

Generally, one slot may include 14 or 12 time division duplex orthogonal frequency division multiplexing (OFDM) symbols, regardless of the subcarrier spacing.

In addition, in order to fully utilize smaller resources, a mini-slot may also be used, which can start from any OFDM symbol within a slot. Each mini-slot may contain 1 to 14 symbols.

### 3. Physical uplink shared channel (PUSCH)

The PUSCH may be configured to carry data from an uplink shared channel (USCH).

Physical downlink shared channel (PDSCH)

The PDSCH may be configured to carry data from a transmission downlink shared channel (DSCH).

In order to better understand a method for determining time domain resources disclosed by embodiments of the present disclosure, the following first describes a communication system to which the embodiments of the present disclosure are applicable.

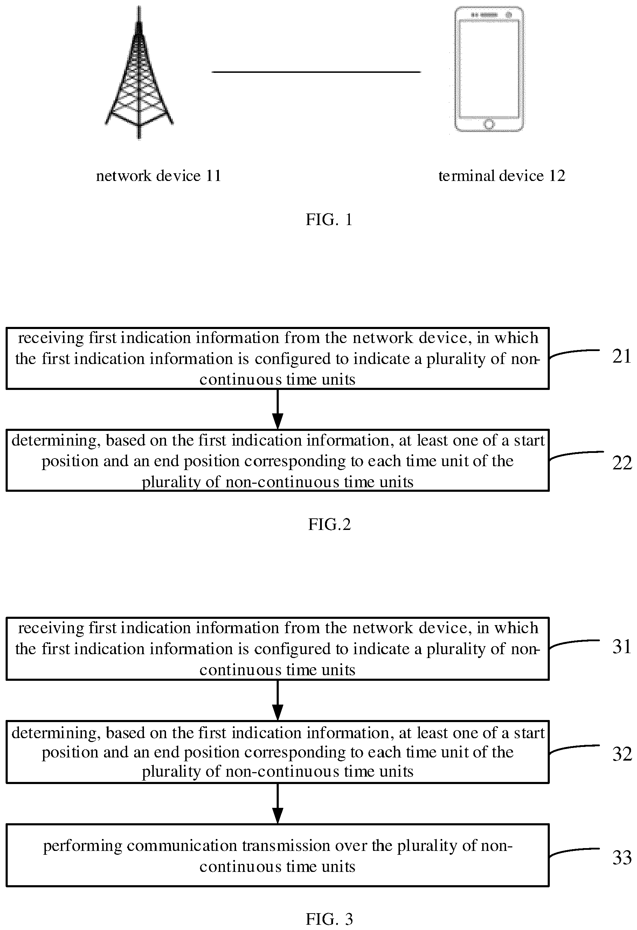

Referring to FIG. 1, FIG. 1 is a schematic structural diagram of a communication system provided by embodiments of the present disclosure. The communication system may include, but is not limited to, a network device and a terminal device. The number and shape of the devices shown in FIG. 1 are only for examples and do not constitute limitations to the embodiments of the present disclosure. In practical applications, two or more network devices and two or more terminal devices may be included. The communication system shown in FIG. 1 includes one network device 11 and one terminal device 12 as an example.

It should be noted that the technical solutions of embodiments of the present disclosure can be applied to various communication systems. For example: a long term evolution (LTE) system, a 5th generation (5G) mobile communication system, a 5G new radio (NR) system, or other future new mobile communication systems.

The network device 11 in the embodiments of the present disclosure is an entity on a network side for transmitting or receiving signals. For example, the network device 11 may be an evolved NodeB (eNB), a transmission reception point (TRP), a next generation NodeB (gNB) in an NR system, a base station in other future mobile communication systems, or an access node in a wireless fidelity (WiFi) system. The embodiments of the present disclosure do not limit the specific technology and specific device form adopted by the network device. The network device provided by the embodiments of the present disclosure may be composed of a central unit (CU) and a distributed unit (DU). The CU may also be referred to as a control unit (CU). By adopting a CU-DU structure, the network device, such as a protocol layer of the base station, can be split. Functions of some protocol layers are centrally controlled by the CU, and functions of part or all of the remaining protocol layers are distributed in the DU, and the CU centrally controls the DU.

The terminal device 12 in the embodiments of the present disclosure is an entity on a user side for receiving or transmitting signals, such as a mobile phone. The terminal device may also be referred to as a terminal, a user equipment (UE), a mobile station (MS), a mobile terminal (MT), and the like. The terminal device can be a car with a communication function, a smart car, a mobile phone, a wearable device, a tablet computer (Pad), a computer with a wireless transceiver function, a virtual reality (VR) terminal device, an augmented reality (AR) terminal device, a wireless terminal in industrial control, a wireless terminal in self-driving, a wireless terminal in remote medical surgery, a wireless terminal device in smart grid, a wireless terminal in transportation safety, a wireless terminal in smart city, a wireless terminal in smart home, and so on. The embodiments of the present disclosure do not limit the specific technology and specific device form adopted by the terminal device.

It can be understood that the communication system described in the embodiments of the present disclosure is for the purpose of illustrating the technical solutions of the embodiments of the present disclosure more clearly, and does not constitute a limitation on the technical solutions provided by the embodiments of the present disclosure. With the evolution of the system architecture and the emergence of new service scenarios, the technical solutions provided by the embodiments of the present disclosure are also applicable to similar technical problems.

A method and an apparatus for determining time domain resources provided by the present disclosure will be described in detail below with reference to the accompanying drawings.

Referring to FIG. 2, which is a schematic flowchart of a method for determining time domain resources provided by an embodiment of the present disclosure. The method is configured to be performed by a terminal device. As shown in Figure 2, the method may include but is not limited to the following steps.

In step 21, first indication information is received from the network device, in which the first indication information is configured to indicate a plurality of non-continuous time units to the terminal device.

Optionally, the first indication information may be downlink control information DCI, or may be any other information that can be configured to indicate the plurality of non-continuous time units to the terminal device, etc., which is not limited in the present disclosure.

Optionally, the plurality of non-continuous time units may be at least one of: a plurality of non-continuous uplink time units, a plurality of non-continuous downlink time units, a plurality of non-continuous flexible time units, a plurality of non-continuous uplink time units and flexible time units, or a plurality of non-continuous downlink time units and flexible time units.

The uplink time unit can only be used for uplink communication transmission, the downlink time unit can only be used for downlink communication transmission, and the flexible time unit is a time unit without a determined transmission direction. When a DCI format corresponding to the DCI is a DCI format configured to schedule PDSCH, a flexible time unit scheduled by the DCI can be used for PDSCH transmission. When the DCI format corresponding to the DCI is a DCI format configured to schedule PUSCH, a flexible time unit scheduled by the DCI can be used for PUSCH transmission.

For example, the plurality of non-continuous time units may be a plurality of non-continuous uplink time units, a plurality of non-continuous downlink time units, a plurality of non-continuous uplink time units and a plurality of non-continuous downlink time units, a plurality of non-continuous downlink time units and flexible time units, or a plurality of non-continuous uplink time units and flexible time units, which is not limited in the present disclosure.

Optionally, in the present disclosure, a type of the time unit may be at least one of: a slot, a mini-slot, a symbol, a subframe, or a frame.

In step 22, at least one of a start position and an end position corresponding to each time unit of the plurality of non-continuous time units is determined based on the first indication information.

In the present disclosure, after receiving the first indication information, the terminal device may determine, according to the indication of the first indication information, the start position corresponding to each non-continuous time unit, the end position corresponding to each non-continuous time unit, or the start position and end position corresponding to each non-continuous time unit. Further, based on at least one of the determined start position and end position corresponding to each non-continuous time unit, communication transmission is performed on each time unit.

In this way, the terminal device can determine the positions of the plurality of non-continuous time units by receiving the indication information once. That is, by using the indication information once, the plurality of non-continuous time units can be scheduled for the terminal device to perform communication transmission, effectively reducing the transmission of control signaling, saving resources, and improving the efficiency of communication.

In the embodiments of the present disclosure, the terminal device first receives the first indication information from the network device, and then determines, based on the first indication information, at least one of the start position and the end position corresponding to each time unit of the plurality of non-continuous time units. Therefore, the terminal device can determine the positions of the plurality of non-continuous time units through the first indication information, thereby effectively reducing the transmission of control signaling, saving resources, and improving efficiency.

Referring to FIG. 3, which is a schematic flowchart of a method for determining time domain resources provided by an embodiment of the present disclosure. The method is configured to be performed by a terminal device. As shown in Figure 3, the method may include but is not limited to the following steps.

In step 31, first indication information is received from the network device, in which the first indication information is configured to indicate a plurality of non-continuous time units to the terminal device.

Optionally, the first indication information may be downlink control information DCI.

Optionally, the number of the plurality of non-continuous time units indicated by the first indication information is less than or equal to a fourth threshold.

Specifically, if the number of non-continuous time units is too large, when one indication information is used for scheduling, the scheduling time may be too long, the flexibility is poor, and the channel state information on which the scheduling is based changes too much, which may cause inaccuracy. Therefore, in the present disclosure, the number of non-continuous time units indicated to the terminal device by the first indication information is limited to minimize signaling overhead and improve accuracy.

The fourth threshold may be a value indicated by the network device, or may also be a value preconfigured by the terminal device according to a protocol agreement, which is not limited in the present disclosure.

In step 32, at least one of a start position and an end position corresponding to each time unit of the plurality of non-continuous time units is determined based on the first indication information.

In the present disclosure, after receiving the first indication information, the terminal device may determine at least one of the start position and the end position corresponding to each non-continuous time unit according to the indication of the first indication information.

In step 33, performing communication transmission over the plurality of non-continuous time units.

Optionally, in response to the plurality of non-continuous time units being uplink time units and/or flexible time units, PUSCH data transmission is performed over the plurality of non-continuous time units.

When a DCI format corresponding to the DCI scheduling the plurality of non-continuous time units is a DCI format for scheduling PUSCH, the plurality of non-continuous time units scheduled by the DCI are uplink time units and/or flexible time units.

Specifically, when the plurality of non-continuous time units are uplink time units, the terminal device may perform PUSCH data transmission over the plurality of non-continuous uplink time units. When the plurality of non-continuous time units are flexible time units, the terminal device may perform PUSCH data transmission over the plurality of non-continuous flexible time units. When the plurality of non-continuous time units are uplink time units and flexible time units, the terminal device may perform PUSCH data transmission over the plurality of non-continuous uplink time units and flexible time units.

Optionally, in response to the plurality of non-continuous time units being downlink time units and/or flexible time units, PDSCH data transmission is performed over the plurality of non-continuous time units.

When a DCI format corresponding to the DCI scheduling the plurality of non-continuous time units is a DCI format for scheduling PDSCH, the plurality of non-continuous time units scheduled by the DCI are downlink time units and/or flexible time units.

Specifically, when the plurality of non-continuous time units are downlink time units, the terminal device may perform PDSCH data transmission over the plurality of non-continuous downlink time units. When the plurality of non-continuous time units are flexible time units, the terminal device may perform PDSCH data transmission over the plurality of non-continuous flexible time units. When the plurality of non-continuous time units are downlink time units and flexible time units, the terminal device may perform PDSCH data transmission over the plurality of non-continuous downlink time units and flexible time units.

In the embodiments of the present disclosure, the terminal device can first receive the first indication information from the network device, and then, according to the first indication information, determine at least one of the start position and the end position corresponding to each time unit of the plurality of non-continuous time units, communication transmission can then be performed over the plurality of non-continuous time units. Therefore, the terminal device can determine the positions of the plurality of non-continuous time units through the first indication information, and perform communication transmission over respective time units, thereby effectively reducing the transmission of control signaling, saving resources, and improving efficiency.

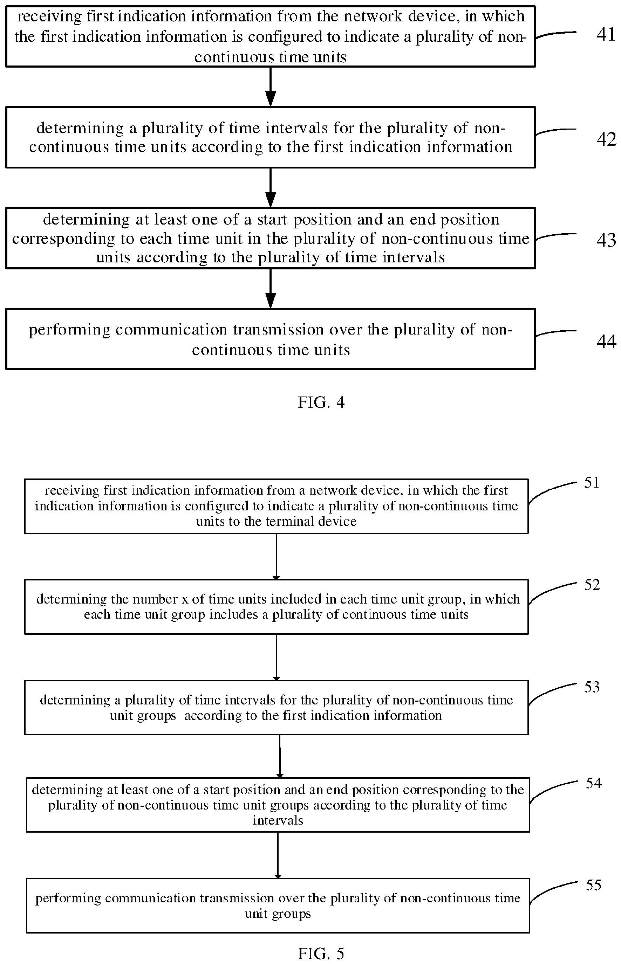

Referring to FIG. 4, which is a schematic flowchart of a method for determining time domain resources provided by an embodiment of the present disclosure. The method is configured to be performed by a terminal device. As shown in Figure 4, the method may include but is not limited to the following steps.

In step 41, first indication information is received from the network device, in which the first indication information is configured to indicate a plurality of non-continuous time units to the terminal device.

Optionally, the first indication information may be downlink control information DCI.

Optionally, a type of the time unit may be at least one of: a slot, a mini-slot, a symbol, a subframe, or a frame.

In step 42, a plurality of time intervals for the plurality of non-continuous time units are determined according to the first indication information.

Optionally, the number of the plurality of time intervals is M, and M is an integer. A first time interval is configured to indicate a time interval between a first time unit and the first indication information. An ith time interval is configured to indicate a time interval between an i-1th time unit and an ith time unit, where i is an integer greater than 1 and less than or equal to M.

For example, the time intervals indicated by the first indication information are 2, 3, and 5, respectively. Therefore, after receiving the first indication information, the terminal device may determine that the first time unit and the first indication information are separated by 2 time interval values, and the first time unit and the second time unit are separated by 3 time interval value, the second time unit and the third time unit are separated by 5 time interval values.

Alternatively, the time intervals indicated by the first indication information are 2, 1, and 5, respectively. Therefore, after receiving the first indication information, the terminal device may determine that the first time unit and the first indication information are separated by 2 time interval values; the first time unit and the second time unit are separated by 1 time interval value, that is, the first time unit and the second time unit are continuous when the time interval value is the same as the time unit; and the second time unit and the third time unit are separated by 5 time interval values.

It should be noted that the time interval value and the time unit may be the same time unit, or may be different time units, which are not limited in the present disclosure.

For example, the time unit is a slot, and the time interval value is a slot. The time intervals indicated by the first indication information are 2, 3, and 5, respectively. Therefore, after receiving the first indication information, the terminal device may determine that: the first time unit and the first indication information are separated by 2 time interval values, the first time unit and the second time unit are separated by 3 time interval value, the second time unit and the third time unit are separated by 5 time interval values. Assuming that the first indication information is in a 1st slot, then the first time unit is a 3rd slot, the second time unit is a 6th slot, and the third time unit is an 11th slot.

Alternatively, the time unit is a mini-slot and occupies symbols 4 to 12 in one slot, and the time interval value is a slot. The time intervals indicated by the first indication information are 2, 3, and 5, respectively. Therefore, after receiving the first indication information, the terminal device may determine that: the first time unit and the first indication information are separated by 2 time interval values, the first time unit and the second time unit are separated by 3 time interval value, the second time unit and the third time unit are separated by 5 time interval values. Assuming that the first indication information is in a 1st slot, then the first time unit is a mini-slot in a 3rd slot, i.e., symbols 4 to 12, the second time unit is a mini-slot in a 6th slot, i.e., symbols 4 to 12, and the third time unit is a mini-slot in an 11th slot, i.e., symbols 4 to 12.

It should be noted that the above examples are merely illustrative, and cannot be used as limitations on the first indication information, time units, time interval values, etc. in embodiments of the present disclosure.

Optionally, the first time interval between the first time unit and the first indication information may be a time interval between a reference moment of the first indication information and a reference moment of the first time unit.

The reference moment of the first indication information may be a position of at least one of the following where the first indication information is located: a position of a first slot, a position of a last slot, a position of a first symbol, or a position of a last symbol.

In addition, the reference moment of the first time unit may be a position of at least one of the following where the first time unit is located: a position of a first slot, a position of a last slot, a position of a first symbol, or a position of a last symbol.

Optionally, the time interval between the i-1th time unit and the ith time unit may be a time interval between a reference moment of the i-1th time unit and a reference moment of the ith time unit.

The reference moment of the ith time unit may be a position of at least one of the following where the ith time unit is located: a position of a first slot, a position of a last slot, a position of a first symbol, and a position of a last symbol.

Optionally, the positions corresponding to the reference moment of the first indication information and respective reference moments of the time units may be indicated by the network device, or determined by the terminal device according to the protocol agreement, which is not limited in the present disclosure.

In step 43, at least one of a start position and an end position corresponding to each time unit in the plurality of non-continuous time units is determined according to the plurality of time intervals.

In the present disclosure, after determining the plurality of time intervals for the plurality of non-continuous time units, the terminal device may determine at least one of the start position and the end position corresponding to each time unit according to the plurality of time intervals .

Optionally, after determining the plurality of time intervals for the plurality of non-continuous time units, the terminal device may determine the start position corresponding to each time unit according to the plurality of time intervals, and then according to the length and/or the type of the time unit, it is determined to occupy which time-domain resource locations.

For example, if the terminal device determines that: the first time unit and the first indication information are separated by two time interval values. Then it may be further determined that: a start moment of the first time unit is an end moment of 2 time interval values after the first indication information, and an end moment of the first time unit is a moment after a time length corresponding to the first time unit passes.

Optionally, in the present disclosure, in order to more accurately determine at least one of the start positions and the end positions of the plurality of non-continuous time units, the type of each time unit may be determined first.

Optionally, the type of the time unit may be at least one of: a slot, a mini-slot, a symbol, a subframe and a frame.

Optionally, the terminal device may receive second indication information from the network device. The second indication information is configured to indicate the types of the plurality of non-continuous time units, and then determine the plurality of non-continuous time units according to the second indication information.

For example, the second indication information received by the terminal device indicates that the type of the time unit is a slot. Then the terminal device may determine that the types of the plurality of non-continuous time units are slots.

It can be understood that by using mini-slots and symbols as time units, the smaller time resources can be used as much as possible, so that the utilization rate of the smaller time resources can be improved, thereby reducing the waste of resources.

It can be understood that after determining the types of the plurality of non-continuous time units, at least one of the start position and the end position of each time unit can be determined according to the multiple time intervals for the plurality of non-continuous time units..

For example, the moment corresponding to the first indication information is t, the multiple time intervals determined by the terminal device are 2 subframes and 3 subframes, respectively, and the types of the time units are subframes. Then it can be determined that the start moment of the first time unit is: t+2ms (the duration corresponding to 2 subframes) and the end moment of the first time unit is: t+3ms (the duration of 3 subframes), and the start moment of the second time unit is: t+6ms (the duration of 6 subframes) and the end moment of the second time unit is: t+7ms (the duration of 7 subframes), and so on.

The moment t corresponding to the first indication information may be the reference moment corresponding to the first indication information.

It should be noted that, for the specific content and implementation of the reference moment of the first indication information, reference can be made to the descriptions of other embodiments of the present disclosure, which will not be repeated here.

It should be noted that the above examples are merely illustrative, and cannot be used as limitations on the moment corresponding to the first indication information, each time interval value, the type of time unit, etc., in the embodiment of the present disclosure.

In step 44, communication transmission is performed over the plurality of non-continuous time units.

It should be noted that, for the specific content and implementation of communication transmission performed over the plurality of non-continuous time units, reference can be made to the descriptions of other embodiments of the present disclosure, which will not be repeated here.

In the embodiments of the present disclosure, the terminal device can first receive the first indication information from the network device, and then determine the plurality of time intervals for the plurality of non-continuous time units according to the first indication information, and then determine at least one of the start position and the end position corresponding to each time unit in the plurality of non-continuous time units, and then perform communication transmission over the plurality of non-continuous time units. In this way, the terminal device can determine the positions of the plurality of non-continuous time units through the first indication information, and perform communication transmission over respective time units, thereby effectively reducing the transmission of control signaling, saving resources, and improving efficiency.

Referring to FIG. 5, which is a schematic flowchart of a method for determining time domain resources provided by an embodiment of the present disclosure. The method is configured to be performed by a terminal device. As shown in Figure 5, the method may include but is not limited to the following steps.

In step 51, first indication information is received from a network device, in which the first indication information is configured to indicate a plurality of non-continuous time units to the terminal device.

Optionally, the first indication information may be downlink control information DCI.

In step 52, the number x of time units included in each time unit group is determined, in which each time unit group includes a plurality of continuous time units.

Optionally, the terminal device may receive third indication information sent by the network device, and then determine the number x of time units included in each time unit group according to the third indication information.

The third indication information may be the first indication information. Alternatively, the third indication information may also be other indication information, for example, it may be the second indication information, or other indication information other than the first indication information and the second indication information, and so on. Alternatively, the third indication information may also be the first indication information and other indication information, etc., which is not limited in the present disclosure.

Optionally, the number x of time units included in each time unit group may be the same, or may be different, or may be partially the same, etc., which is not limited in the present disclosure.

For example, the third indication information received by the terminal device indicates that the number of time units included in each time unit group is x. Then the terminal device may determine that the number of time units included in each time unit group is the same, which is x.

Alternatively, the third indication information received by the terminal device indicates that the number of time units included in each time unit group is: x1, x2, and x3 in sequence. Then the terminal device may determine that the number of time units included in each time unit group is x1, x2, and x3 in sequence.

It should be noted that the above examples are merely illustrative, and cannot be used as limitations on the third indication information and the number x of time units included in each time unit group in the embodiments of the present disclosure.

Optionally, the terminal device may further determine the number x of time units included in each time unit group according to the first pre-configured information.

For example, the protocol stipulates that the first pre-configured information is: the number of time units included in each time unit group is x0. Therefore, the terminal device can determine, according to the first pre-configured information, that the number of time units included in each time unit group is x0, etc., which is not limited in the present disclosure.

Optionally, the number x of time units included in each time unit group is greater than or equal to a first threshold.

The first threshold may be a value indicated by the network device, or may also be a value preconfigured by the terminal device according to a protocol agreement. For example, the first threshold may be 1, 2, etc., which is not limited in the present disclosure.

In step 53, a plurality of time intervals for the plurality of non-continuous time unit groups are determined according to the first indication information.

Optionally, the number of multiple non-continuous time unit groups is less than or equal to a second threshold.

Specifically, if the number of non-continuous time unit groups is too large, when one indication information is used for scheduling, the scheduling time may be too long, the flexibility is poor, and the channel state information on which the scheduling is based changes too much, which may cause inaccuracy. Therefore, in the present disclosure, the number of non-continuous time unit groups is limited to minimize signaling overhead and improve accuracy.

The second threshold may be a value indicated by the network device, or may also be a value preconfigured by the terminal device according to a protocol agreement, which is not limited in the present disclosure.

Optionally, the number of the plurality of time intervals is N, and N is an integer. A first time interval is configured to indicate a time interval between a first time unit group and the first indication information. An ith time interval is configured to indicate a time interval between an i-1th time unit group and an ith time unit group, in which i is an integer greater than 1 and less than or equal to N.

For example, the time intervals indicated by the first indication information are 2, 3, and 5, respectively. Therefore, after receiving the first indication information, the terminal device may determine that: the first time unit group and the first indication information are separated by 2 time interval values, and the first time unit group and the second time unit group are separated by 3 time interval values, and the second time unit group and the third time unit group are separated by 5 time interval values.

It should be noted that the above examples are merely illustrative, and cannot be used as limitations on the first indication information, the time interval value, and the like in the embodiments of the present disclosure.

Optionally, a first time interval is configured to indicate a time interval between a first time unit in the first time unit group and a first indication signaling, and an ith time interval is configured to indicate a time interval between a first time unit in the i-1th time unit group and a first time unit in the ith time unit group.

For example, the time intervals indicated by the first indication information are 2, 3, and 5, respectively. Therefore, after receiving the first indication information, the terminal device may determine that: the first time unit of the first time unit group and the first indication information are separated by 2 time interval values, a first time unit in a first time unit group and a first time unit in a second time unit group are separated by 3 time interval values, and the first time unit in the second time unit group and a first time unit in a third time unit group is separated by 5 time interval values.

It should be noted that the time interval value and the time unit may be the same time unit or different time units, and the specific content and implementation thereof can refer to the descriptions of other embodiments of the present disclosure, and will not be repeated here.

It should be noted that the above examples are merely illustrative, and cannot be used as limitations on the first indication information, the time interval value, and the like in the embodiments of the present disclosure.

Optionally, the first time interval is configured to indicate a time interval between a last time unit in the first time unit group and the first indication information, and the ith time interval is configured to indicate a time interval between a last time unit in the i-1th time unit group and a last time unit in the ith time unit group.

For example, the time intervals indicated by the first indication information are 2, 3, and 5, respectively. Therefore, after receiving the first indication information, the terminal device may determine that: the last time unit in the first time unit group and the first indication information are separated by 2 time interval values, the last time unit in the first time unit group and the last time unit in the second time unit group are separated by 3 time interval values, and the last time unit in the second time unit group and the last time unit in the third time unit group are separated by 5 time interval values.

It should be noted that the above examples are merely illustrative, and cannot be used as limitations on the first indication information, the time interval value, and the like in the embodiments of the present disclosure.

Optionally, the first time interval is configured to indicate a time interval between the first time unit in the first time unit group and the first indication information, and the ith time interval is configured to indicate a time interval between a last time unit in the i-1th time unit group and a first time unit in the ith time unit group.

For example, the time intervals indicated by the first indication information are 2, 3, and 5, respectively. Therefore, after receiving the first indication information, the terminal device may determine that: the first time unit of the first time unit group and the first indication information are separated by 2 time interval values, the last time unit in the second time unit group and the first time unit in the second time unit group are separated by 3 time interval values, and the last time unit in the second time unit group and the first time unit in the third time unit group are separated by 5 time interval values.

It should be noted that the above examples are merely illustrative, and cannot be used as limitations on the first indication information, the time interval value, and the like in the embodiments of the present disclosure.

Optionally, the first time interval between the first time unit group and the first indication information may be a time interval between a reference moment of the first indication information and a reference moment of the first time unit group.

The reference moment of the first indication information may be the position of at least one of the following where the first indication information is located: a position of a first slot, a position of a last slot, a position of a first symbol, or a position of a last symbol.

In addition, the reference moment of the first time unit group may be at least one of the following positions where the first time unit group is located: a position of a first slot, a position of a last slot, a position of a first symbol, or a position of a last symbol.

Optionally, the time interval between the i-1th time unit group and the ith time unit group may be a time interval between a reference moment of the i-1th time unit group and a reference moment of the ith time unit group.

The reference moment of the ith time unit group may be at least one of the following positions where the ith time unit group is located: a position of a first slot, a position of a last slot, a position of a first symbol, or a position of a last symbol.

Optionally, the positions of the reference moment of the first indication information and the reference moments of respective time unit groups may be indicated by the network device or determined by the terminal device according to the protocol agreement, which is not limited in the present disclosure.

In step 54, at least one of a start position and an end position corresponding to the plurality of non-continuous time unit groups is determined according to the plurality of time intervals.

In the present disclosure, after determining the plurality of time intervals for the plurality of non-continuous time unit groups, the terminal device may determine at least one of the start position and the end position corresponding to each time unit group according to the plurality of time intervals.

Optionally, after the terminal device determines the plurality of time intervals for the plurality of non-continuous time unit groups, the start position corresponding to each time unit group may be determined according to the plurality of time intervals, and then according to the number of time units included in the time unit group and the length and/or type of each time unit, it may be determined to occupy which time domain resource positions.

For example, if the terminal device determines that the first time unit group and the first indication information are separated by two time interval values. Then it can be further determined that: the start moment of the first time unit group is an end moment of 2 time interval values after the reference moment of the first indication information, and the end moment of the first time unit group is a moment after the time duration corresponding to the first time unit passes.

It should be noted that, for the specific content and implementation of the reference moment of the first indication information, reference may be made to the descriptions of other embodiments of the present disclosure, which will not be repeated here.

Optionally, in the present disclosure, in order to more accurately determine at least one of the start position and the end position of the plurality of non-continuous time unit groups, the type of each time unit may be determined first.

Optionally, the type of the time unit may be at least one of: a slot, a mini-slot, a symbol, a subframe, or a frame.

Optionally, the terminal device may receive second indication information from the network device, in which the second indication information is configured to indicate types of the plurality of non-continuous time units, and then the types of the plurality of non-continuous time units are determined according to the second indication information.

For example, the second indication information received by the terminal device indicates that the types of the time units are slots. Then the terminal device may determine that the types of the plurality of non-continuous time units are slots.

It can be understood that after determining the types of the plurality of non-continuous time units, at least one of the start position and the end position of each time unit group may be determined according to the plurality of time intervals of the plurality of non-continuous time unit groups.

In step 55, communication transmission is performed over the plurality of non-continuous time unit groups.

It should be noted that, for the specific content and implementation of performing communication transmission over the plurality of non-continuous time unit groups, reference may be made to the descriptions of other embodiments of the present disclosure, which will not be repeated here.

In the embodiments of the present disclosure, the terminal device can first receive the first indication information from the network device, then determine the number x of time units included in each time unit group, and then determine the plurality of time intervals for the plurality of non-continuous time unit groups, and at least one of the start position and the end position corresponding to each non-continuous time unit group, and then perform communication transmission over the plurality of non-continuous time unit groups. Therefore, the terminal device can determine the positions of the plurality of non-continuous time unit groups through the first indication information, and perform communication transmission over each time unit group, thereby effectively reducing the transmission of control signaling, saving resources, and increased efficiency.

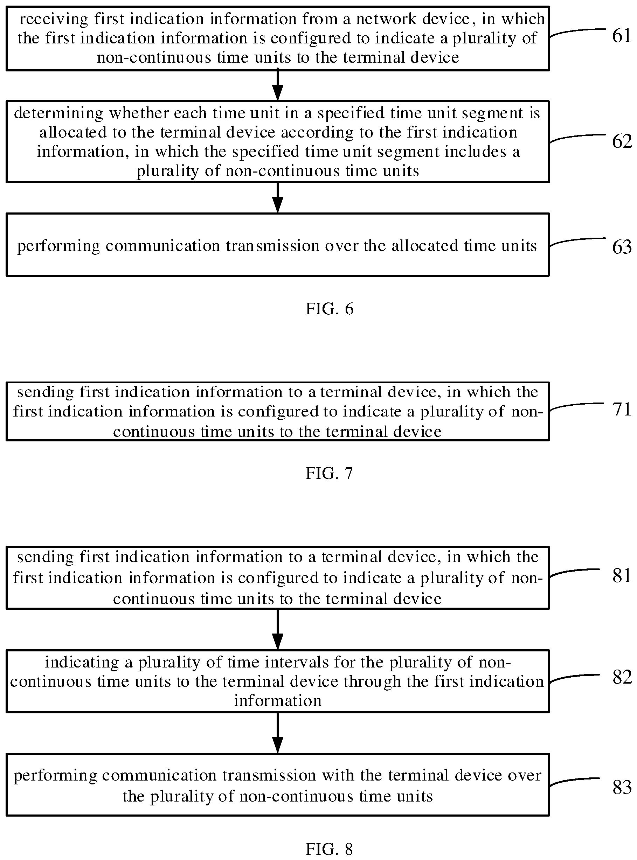

Referring to FIG. 6, which is a schematic flowchart of a method for determining time domain resources provided by an embodiment of the present disclosure. The method is configured to be performed by a terminal device. As shown in Figure 6, the method may include but is not limited to the following steps.

In step 61, first indication information is received from a network device, in which the first indication information is configured to indicate a plurality of non-continuous time units to the terminal device.

Optionally, the first indication information may be downlink control information DCI.

In step 62, it is determined that whether each time unit in a specified time unit segment is allocated to the terminal device according to the first indication information, in which the specified time unit segment includes a plurality of non-continuous time units.

It can be understood that the specified time unit segment may include a plurality of continuous time units. When time units are allocated to the terminal device, some of the time units are not allocated to the terminal device, which may cause the time units to be non-continuous.

Optionally, the terminal device may determine, according to the first indication information, a time interval between a first time unit in the time unit segment and the first indication information.

Optionally, the time interval between the first time unit in the time unit segment and the first indication information may be a time interval between a reference moment of the first indication information and a reference moment of a first time unit in the time unit segment.

The reference moment of the first indication information may be a position of at least one of the following where the first indication information is located: a position of a first slot, a position of a last slot, a position of a first symbol, or a position of a last symbol.

In addition, the reference moment of the first time unit in the time unit segment may be a position of at least one of the following where the first time unit is located: a position of a first slot, a position of a last slot, a position of a first symbol, or a position of a last symbol.

It should be noted that, for the specific content and implementation of determining the time interval between the first time unit and the first indication information according to the first indication information, reference may be made to the descriptions of other embodiments of the present disclosure, which will not be repeated here.

Optionally, the terminal device may also receive fourth indication information sent by the network device, and then determine the number of the plurality of continuous time units included in the specified time segment according to the fourth indication information.

Optionally, the fourth indication information may be the first indication information. Alternatively, the fourth indication information may also be other indication information different from the first indication information, for example, it may be the second indication information, or other information other than the first information and the second information, and so on. Alternatively, the fourth indication information may also be the first indication information and other indication information, etc., which is not limited in the present disclosure.

Optionally, the number of the plurality of continuous time units included in the specified time unit segment may also be determined according to the second pre-configured information.

For example, the protocol stipulates that the second pre-configured information is: the specified time unit segment includes 32 continuous time units. Therefore, the terminal device can determine, according to the second pre-configured information, that the number of continuous time units included in the specified time unit segment is 32, etc., which is not limited in the present disclosure.

For another example, the number of continuous time units included in the specified time unit segment is 32, and the time unit is a slot. Then the first indication information includes 32 bits, each bit corresponds to a slot, and a bit value of "1" indicates that a slot corresponding to this bit is allocated to the terminal device, and a bit value of "0" indicates that the slot corresponding to this bit is not allocated to the terminal device; or the bit value of " 1" indicates that the slot corresponding to this bit is not allocated to the terminal device, and the bit value of "0" indicates that the slot corresponding to this bit is allocated to the terminal device. If the first indication information is in a first slot, and the first indication information indicates that the time interval between the first indication information and the first time unit is 2 slots, then 32 bits are configured to indicate which slots of 32 slots from a 3rd slot to a 34th slot are allocated to the terminal device, and which slots are not allocated to the terminal device.

It should be noted that the above examples are merely illustrative, and cannot be used as limitations on the first indication information, the number of continuous time units included in the specified time unit segment, and the like in the embodiments of the present disclosure.

Optionally, the number of the plurality of continuous time units included in the specified time segment is less than or equal to a third threshold.

Specifically, if the number of continuous time units in the specified time unit segment is too large, when one indication information is used for scheduling, the scheduling time may be too long, the flexibility is poor, and the channel state information on which the scheduling is based changes too much, which may cause inaccuracy. Therefore, in the present disclosure, the number of the plurality of continuous time units included in the specified time segment is limited to minimize signaling overhead and improve accuracy.

The third threshold may be a value indicated by the network device, or may also be a value preconfigured by the terminal device according to a protocol agreement, which is not limited in the present disclosure.

In step 63, communication transmission is performed over the allocated time units.

Optionally, the terminal device may first determine the allocation of each time unit in the specified time segment according to the first indication information, and then may perform communication transmission over the time units allocated to the terminal device.

Optionally, the terminal device may also perform communication transmission over flexible time units as required.

In the embodiments of the present disclosure, the terminal device can first receive the first indication information from the network device, then determine whether each time unit in the specified time unit segment including the plurality of continuous time units is allocated to the terminal device, and perform communication transmission over the allocated time units. Therefore, the terminal device can determine the position of each time unit through the first indication information, and perform communication transmission over the allocated time units, thereby effectively reducing the transmission of control signaling, saving resources, and improving efficiency.

Referring to FIG. 7, which is a schematic flowchart of a method for determining time domain resources provided by an embodiment of the present disclosure. The method is configured to be performed by a network device. As shown in Figure 7, the method may include but is not limited to the following steps.

In step 71, first indication information is sent to a terminal device, in which the first indication information is configured to indicate a plurality of non-continuous time units to the terminal device.

Optionally, the first indication information may be downlink control information DCI, or may be any other information that can be configured to indicate the plurality of non-continuous time units to the terminal device, etc., which is not limited in the present disclosure.

Optionally, the plurality of non-continuous time units may be at least one of: a plurality of non-continuous uplink time units, a plurality of non-continuous downlink time units, a plurality of non-continuous flexible time units, a plurality of non-continuous uplink time units and flexible time units, and a plurality of non-continuous downlink time units and flexible time units.

The uplink time unit can only be used for uplink communication transmission, the downlink time unit can only be used for downlink communication transmission, and the flexible time unit is a time unit without a determined transmission direction. When a DCI format corresponding to the DCI is a DCI format configured to schedule PDSCH, a flexible time unit scheduled by the DCI can be used for PDSCH transmission. When the DCI format corresponding to the DCI is a DCI format configured to schedule PUSCH, a flexible time unit scheduled by the DCI can be used for PUSCH transmission.

For example, the plurality of non-continuous time units may be a plurality of non-continuous uplink time units, a plurality of non-continuous downlink time units, a plurality of non-continuous uplink time units and a plurality of non-continuous downlink time units, a plurality of non-continuous downlink time units and flexible time units, or a plurality of non-continuous uplink time units and flexible time units, which is not limited in the present disclosure.

Optionally, in the present disclosure, a type of the time unit may be at least one of: a slot, a mini-slot, a symbol, a subframe, or a frame.

Optionally, the number of the plurality of non-continuous time units indicated by the first indication information is less than or equal to a fourth threshold.

Specifically, if the number of non-continuous time units is too large, when one indication information is used for scheduling, the scheduling time may be too long, the flexibility is poor, and the channel state information on which the scheduling is based changes too much, which may cause inaccuracy. Therefore, in the present disclosure, the number of non-continuous time units indicated to the terminal device by the first indication information is limited to minimize signaling overhead and improve accuracy.

The fourth threshold may be a value indicated by the network device, or may also be a value preconfigured by the terminal device according to a protocol agreement, which is not limited in the present disclosure.

In the present disclosure, the network device sends the first indication information to the terminal device, so that the terminal device determines at least one of the start position and the end position corresponding to each non-continuous time unit according to the indication of the first indication information. Then the network device can perform communication transmission with the terminal device on each time unit.

Therefore, the network can enable the terminal device to determine the positions of the plurality of non-continuous time units by sending the indication information once. That is, by sending the indication information once, the terminal device can be scheduled with the plurality of non-continuous time units to perform communication transmission, thereby effectively reducing the transmission of control signaling, saving resources, and improving communication efficiency.

In the embodiments of the present disclosure, the network device can send the first indication information to the terminal device, so that the terminal device can determine the plurality of non-continuous time units according to the first indication information. Therefore, through the first indication information, the network devices can schedule the plurality of non-continuous time units for the terminal device to perform communication transmission, thereby effectively reducing the transmission of control signaling, saving resources, and improving efficiency.

Referring to FIG. 8, which is a schematic flowchart of a method for determining time domain resources provided by an embodiment of the present disclosure. The method is configured to be performed by a network device. As shown in Figure 8, the method may include but is not limited to the following steps.

In step 81, first indication information is sent to a terminal device, in which the first indication information is configured to indicate a plurality of non-continuous time units to the terminal device.

In step 82, a plurality of time intervals for the plurality of non-continuous time units is indicated to the terminal device through the first indication information.

Optionally, the number of the plurality of time intervals is M, and M is an integer. A first time interval is configured to indicate a time interval between a first time unit and the first indication information. An ith time interval is configured to indicate a time interval between an i-1th time unit and an ith time unit, where i is an integer greater than 1 and less than or equal to M.

Optionally, the first time interval between the first time unit and the first indication information may be a time interval between a reference moment of the first indication information and a reference moment of the first time unit.

The reference moment of the first indication information may be a position of at least one of the following where the first indication information is located: a position of a first slot, a position of a last slot, a position of a first symbol, or a position of a last symbol.

In addition, the reference moment of the first time unit may be a position of at least one of the following where the first time unit is located: a position of a first slot, a position of a last slot, a position of a first symbol, or a position of a last slot.

Optionally, a time interval between an i-1th time unit and an ith time unit may be a time interval between a reference moment of the i-1th time unit and a reference moment of the ith time unit.

The reference moment of the ith time unit may be the position of at least one of the following where the ith time unit is located: a position of a first slot, a position of a last slot, a position of a first symbol, or a position of a last slot.

It should be noted that, for the specific implementation and corresponding effect of determining, by the terminal device, the plurality of time intervals for the plurality of non-continuous time units through the first indication information, reference may be made to the descriptions of other embodiments of the present disclosure, which are not repeated here. Repeat.

Optionally, the network device may also send second indication information to the terminal device, in which the second indication information is configured to indicate types of the plurality of non-continuous time units.

Optionally, the type of the time unit may be at least one of: a slot, a mini-slot, a symbol, a subframe or a frame.

It should be noted that, for the specific implementation and corresponding effect of determining, by the terminal device, the types of the plurality of non-continuous time units through the second indication information, reference may be made to the descriptions of other embodiments of the present disclosure, which will not be repeated here.

In step 83, communication transmission is performed with the terminal device over the plurality of non-continuous time units.

Optionally, in response to the plurality of non-continuous time units being uplink time units and/or flexible time units, PUSCH data transmission is performed with the terminal device over the plurality of non-continuous time units.

Optionally, in response to the plurality of non-continuous time units being downlink time units and/or flexible time units, PDSCH data transmission is performed with the terminal device over the plurality of non-continuous time units.

It should be noted that, for the specific content and implementation of performing communication transmission between the network device and the terminal device over the plurality of non-continuous time units, reference may be made to the descriptions in other embodiments of the present disclosure, and will not be repeated here.

In the embodiments of the present disclosure, the network device can send the first indication information to the terminal device, so that the terminal device can determine the plurality of non-continuous time units and the plurality of time intervals for the plurality of non-continuous time units, so that the network device can perform communication transmission with the terminal device over the plurality of non-continuous time units. Therefore, through the first indication information, the network device can schedule the plurality of non-continuous time units for the terminal device for communication transmission, and perform communication transmission with the terminal device over each time unit, thereby effectively reducing the transmission of control signaling, saving resources and improving efficiency.

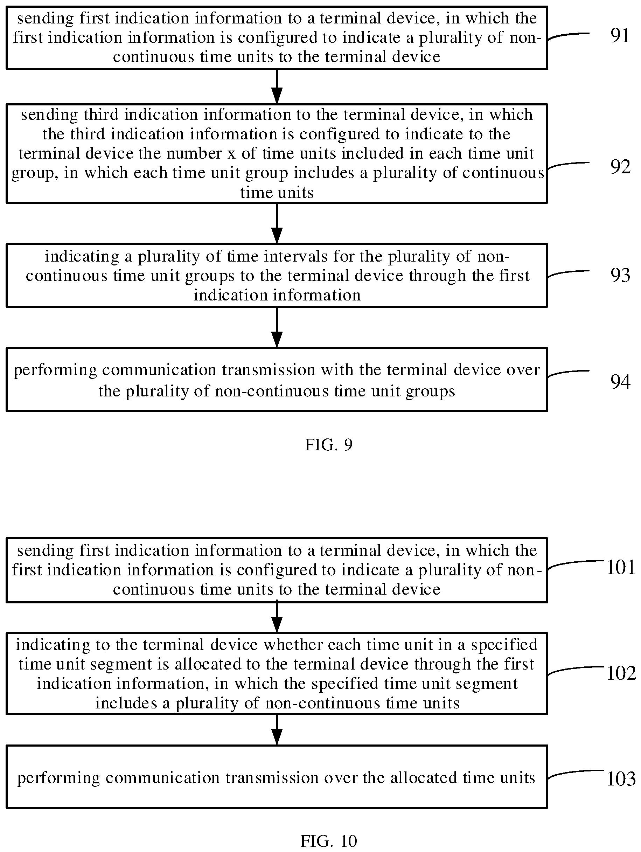

Referring to FIG. 9, which is a schematic flowchart of a method for determining time domain resources provided by an embodiment of the present disclosure. The method is configured to be performed by a network device. As shown in Figure 9, the method may include but is not limited to the following steps.

In step 91, first indication information is sent to a terminal device, in which the first indication information is configured to indicate a plurality of non-continuous time units to the terminal device.

In step 92, third indication information is sent to the terminal device, in which the third indication information is configured to indicate to the terminal device the number x of time units included in each time unit group, in which each time unit group includes a plurality of continuous time units.

Optionally, the third indication information may be the first indication information. Alternatively, the third indication information may also be other indication information different from the first indication information, for example, it may be the second indication information, or other indication information other than the first indication information and the second indication information, and so on. Alternatively, the third indication information may also be the first indication information and other indication information, etc., which is not limited in the present disclosure.

Optionally, the number x of time units included in each time unit group may be the same, or may be different, or may be partially the same, etc., which is not limited in the present disclosure.

Optionally, the number x of time units included in each time unit group is greater than or equal to a first threshold.

The first threshold may be a value indicated by the network device, or may also be a value preconfigured according to the protocol agreement. For example, it may be 1, 2, etc., which is not limited in the present disclosure.

It should be noted that, for operations performed by the terminal device based on the third indication information and corresponding effects, reference may be made to the descriptions of other embodiments of the present disclosure, which will not be repeated here.

In step 93, a plurality of time intervals for the plurality of non-continuous time unit groups is indicated to the terminal device through the first indication information.

Optionally, the number of the plurality of non-continuous time unit groups is less than or equal to a second threshold.

Specifically, if the number of non-continuous time unit groups is too large, when one indication information is used for scheduling, the scheduling time may be too long, the flexibility is poor, and the channel state information on which the scheduling is based changes too much, which may cause inaccuracy. Therefore, in the present disclosure, the number of non-continuous time unit groups is limited to minimize signaling overhead and improve accuracy.

The second threshold may be a value indicated by the network device, or may also be a value preconfigured by the terminal device according to the protocol agreement, which is not limited in the present disclosure.

Optionally, the number of the plurality of time intervals is N, and N is an integer. A first time interval is configured to indicate a time interval between a first time unit group and the first indication information. An ith time interval is configured to indicate a time interval between an i-1th time unit group and the ith time unit group, where i is an integer greater than 1 and less than or equal to N.

Optionally, the first time interval between the first time unit group and the first indication information may be a time interval between a reference moment of the first indication information and a reference moment of the first time unit group.

The reference moment of the first indication information may be a position of at least one of the following where the first indication information is located: a position of a first slot, a position of a last slot, a position of a first symbol, or a position of a last symbol.

In addition, the reference moment of the first time unit group may be at least one of the following positions where the first time unit group is located: a position of a first slot, a position of a last slot, a position of a first symbol, or the position of a last symbol.

Optionally, the time interval between the i-1th time unit group and the ith time unit group may be a time interval between the reference moment of the i-1th time unit group and the reference moment of the ith time unit group.

The reference moment of the ith time unit group may be at least one of the following positions where the ith time unit group is located: a position of a first slot, a position of a last slot, a position of a first symbol, or the position of a last symbol.

It should be noted that, for the specific content and implementation of indicating the plurality of time intervals for the plurality of non-continuous time unit groups to the terminal device through the first indication information, reference may be made to the descriptions of other embodiments of the present disclosure, which will not be repeated here.

In step 94, communication transmission is performed with the terminal device over the plurality of non-continuous time unit groups.

It should be noted that, for the specific content and implementation of performing communication transmission between the network device and the terminal device over the plurality of non-continuous time units, reference may be made to the descriptions of other embodiments of the present disclosure, which will not be repeated here.

In the embodiments of the present disclosure, the network device can send the first indication information to the terminal device to indicate the plurality of non-continuous time units to the terminal device, and then send third indication information to the terminal device to indicate to the terminal device the number x of time units included in each time unit group, the network device can also indicate to the terminal device the plurality of time intervals for the plurality of non-continuous time unit groups, and perform communication transmission with the terminal device over the plurality of non-continuous time units. Therefore, through various indication information, the network device can schedule multiple non-continuous time unit groups for communication transmission for the terminal device, and perform communication transmission with the terminal device over each time unit group, thereby effectively reducing the transmission of control signaling, saving resources and improving efficiency.

Referring to FIG. 10, which is a schematic flowchart of a method for determining time domain resources provided by an embodiment of the present disclosure. The method is configured to be performed by a network device. As shown in Figure 10, the method may include but is not limited to the following steps.

In step 101, first indication information is sent to a terminal device, in which the first indication information is configured to indicate a plurality of non-continuous time units to the terminal device.

In step 102, whether each time unit in a specified time unit segment is allocated to the terminal device is indicated to the terminal device through the first indication information, in which the specified time unit segment includes a plurality of non-continuous time units.

For example, according to the protocol, values of L bits included in the first indication information is configured to represent whether each time unit in the specified time unit segment is allocated to the terminal device, in which L is the number of the time units included in the specified time unit segment. If the first bit is "1", it indicates that the first time unit in the specified time unit segment is allocated to the terminal device; if the second bit is "0", it indicates that the second time unit in the specified time unit segment is not allocated to the terminal device.

Therefore, the network device may assign values to L bits in the first indication information to indicate to the terminal device whether each time unit in the specified time unit segment is allocated to the terminal device.

It should be noted that the above examples are merely illustrative, and cannot be used as limitations on the first indication information, the number of bits, the value of each bit, and the like in the embodiments of the present disclosure.

Optionally, the network device sends fourth indication information to the terminal device, in which the fourth indication information is configured to indicate to the terminal device the number of the plurality of continuous time units.

Optionally, the fourth indication information may be the first indication information. Alternatively, the fourth indication information may also be other indication information different from the first indication information, for example, it may be the second indication information, or other indication information other than the first indication information and the second indication information, and so on. Alternatively, the fourth indication information may also be the first indication information and other indication information, etc., which is not limited in the present disclosure.

Optionally, if the number of continuous time units in the specified time unit segment is too large, when one indication information is used for scheduling, the scheduling time may be too long, the flexibility is poor, and the channel state information on which the scheduling is based changes too much, which causes inaccuracy. Therefore, the number of multiple continuous time units can be set to be less than or equal to the third threshold, so as to improve the accuracy as much as possible.

The third threshold may be a value indicated by the network device, or may also be a value preconfigured according to the protocol agreement, which is not limited in the present disclosure.

It should be noted that, for operations performed by the terminal device based on the fourth indication information and corresponding effects, reference may be made to the descriptions of other embodiments of the present disclosure, and details are not repeated here.

Optionally, the network device may further indicate to the terminal device the time interval between the first time unit in the time unit segment and the first indication information through the first indication information.

Optionally, the time interval between the first time unit in the time unit segment and the first indication information may be a time interval between a reference moment of the first indication information and a reference moment of the first time unit in the time unit segment.

The reference moment of the first indication information may be at least one of the following positions where the first indication information is located: a position of a first slot, a position of a last slot, a position of a first symbol, or a position of a last symbol.

In addition, the reference moment of the first time unit in the time unit segment may be of at least one of the following positions where the first time unit is located: a position of a first slot, a position of a last slot, a position of a first symbol, or a position of a last symbol.

It should be noted that the specific content and implementation of determining by the terminal device whether each time unit in the specified time unit segment is allocated to the terminal device may refer to the descriptions of other embodiments of the present disclosure, and will not be repeated here.

In step 103, communication transmission is performed over the allocated time units.

Optionally, after determining the allocation of each time unit in the specified time segment, the network device may perform communication transmission over the time units allocated to the terminal device.

Optionally, the network device may also perform communication transmission with the terminal device over flexible time units.

In the embodiments of the present disclosure, the network device can send first indication information to the terminal device to indicate to the terminal device the plurality of non-continuous time units and whether each time unit in the specified time unit segment is allocated to the terminal device. Thus, the network device can schedule the plurality of non-continuous time units for communication transmission for the terminal device through the first indication information, thereby effectively reducing the transmission of control signaling, saving resources, and improving efficiency.

In the above-mentioned embodiments provided by the present disclosure, the methods provided by the embodiments of the present disclosure are respectively introduced from the perspectives of network devices and terminal devices. To implement the functions in the methods provided by the above embodiments of the present disclosure, the network devices and the terminal devices may include hardware structures and software modules, and implement the above functions in the form of hardware structures, software modules, or a combination of hardware structures and software modules. A certain function for the above functions may be implemented in the form of a hardware structure, a software module, or a combination of a hardware structure and a software module.

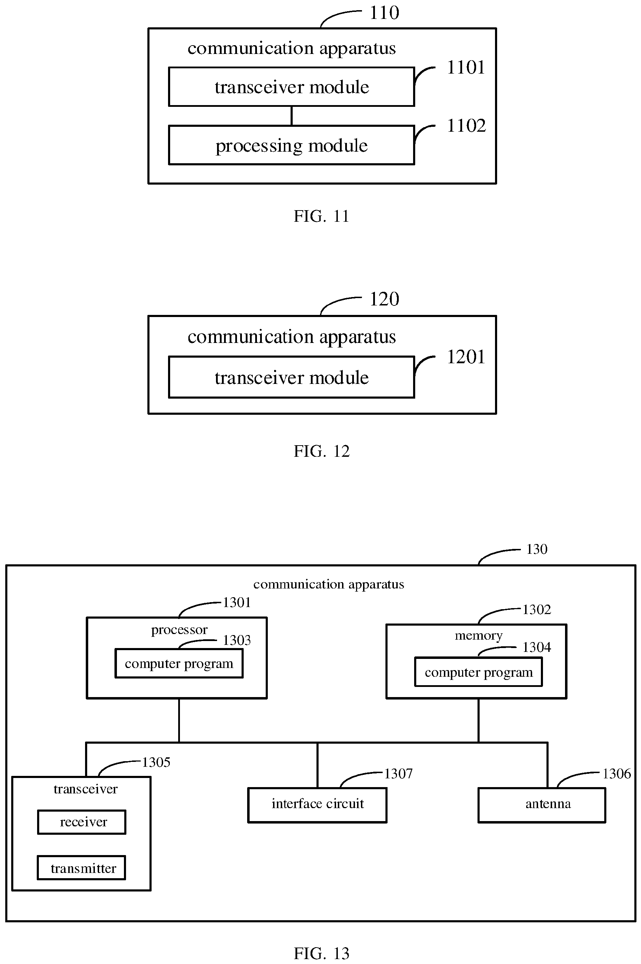

Referring to FIG. 11, which is a schematic structural diagram of a communication apparatus 110 according to an embodiment of the present disclosure. The communication apparatus 110 shown in FIG. 11 may include a transceiver module 1101 and a processing module 1102.

The transceiver module 1101 may include a sending module and/or a receiving module, the sending module is configured to implement a sending function, the receiving module is configured to implement a receiving function, and the transceiver module 1101 may implement the sending function and/or the receiving function.

It can be understood that, the communication apparatus 110 may be a terminal device, an apparatus in a terminal device, or an apparatus that can be matched with the terminal device.

The communication apparatus 110 is configured in the terminal device side, and the apparatus includes:
a transceiver module 1101, configured to receive first indication information from a network device, in which the first indication information is configured to indicate a plurality of non-continuous time units to the terminal device; and
a processing module 1102, configured to determine, based on the first indication information, at least one of a start position and an end position corresponding to each time unit of the plurality of non-continuous time units.

Optionally, the transceiver module 1101 is further configured to receive second indication information, in which the second indication information is configured to indicate types of the plurality of non-continuous time units.

Optionally, the time unit is at least one of: a slot, a mini-slot, a symbol or a subframe.

Optionally, the transceiver module 1101 is further configured to perform communication transmission over the plurality of non-continuous time units.

Optionally, the transceiver module 1101 is specifically configured to:
in response to the plurality of non-continuous time units being uplink time units and/or flexible time units, perform physical uplink shared channel PUSCH data transmission ovre the plurality of non-continuous time units;
   or,
in response to the plurality of non-continuous time units being downlink time units and/or flexible time units, perform physical downlink shared channel PDSCH data transmission over the plurality of non-continuous time units.

Optionally, the first indication information is downlink control information DCI.

Optionally, the processing module 1102 is further configured to determine, according to the first indication information, a plurality of time intervals for the plurality of non-continuous time units.

Optionally, the number of the multiple time intervals is M, where M is an integer. A first time interval is configured to indicate a time interval between a first time unit and the first indication information. An ith time interval is configured to indicate a time interval between an i-1th time unit and an ith time unit, where i is an integer greater than 1 and less than or equal to M.

Optionally, the processing module 1102 is further configured to determine, according to the first indication information, a plurality of time intervals for a plurality of non-continuous time unit groups, in which each time unit group includes a plurality of continuous time units.

Optionally, the processing module 1102 is further configured to determine the number x of time units included in each time unit group according to third indication information and/or according to first pre-configured information.

Optionally, the number x of time units included in each time unit group is the same.

Optionally, the number x of time units included in each time unit group is greater than or equal to a first threshold.

Optionally, the number of the plurality of time intervals is N, and N is an integer. A first time interval is configured to indicate a time interval between a first time unit group and the first indication information. An ith time interval is configured to indicate a time interval between an i-1th time unit group and an ith time unit group, where i is an integer greater than 1 and less than or equal to N.

Optionally, the number of the plurality of non-continuous time unit groups is less than or equal to a second threshold.

Optionally, the processing module 1102 is further configured to determine whether each time unit in a specified time unit segment is allocated to the terminal device according to the first indication information, in which the specified time unit segment includes the plurality of non-continuous time units.

Optionally, the specified time unit segment includes a plurality of continuous time units, and the processing module is further configured to determine the number of the plurality of continuous time units according to fourth indication information and/or according to second preconfigured information.

Optionally, the number of the plurality of continuous time units is less than or equal to a third threshold.

Optionally, the processing module 1102 is further configured to determine, according to the first indication information, a time interval between a first time unit in the time unit segment and the first indication information.

Optionally, the number of the plurality of non-continuous time units indicated by the first indication information is less than or equal to a fourth threshold.

In the communication apparatus provided by the present disclosure, the terminal device first receives the first indication information, and then determines at least one of the start position and the end position corresponding to each time unit in the plurality of non-continuous time units based on the first indication information. Therefore, the terminal device can determine the positions of the plurality of non-continuous time units through the first indication information, thereby effectively reducing the transmission of control signaling, saving resources, and improving efficiency.

Please refer to FIG. 12, which is a schematic structural diagram of a communication apparatus 120 according to an embodiment of the present disclosure. The communication apparatus 120 shown in FIG. 12 may include a transceiver module 1201.

The transceiver module 1201 may include a sending module and/or a receiving module, the sending module is configured to implement a sending function, the receiving module is configured to implement a receiving function, and the transceiver module 1201 may implement the sending function and/or the receiving function.

It can be understood that, the communication apparatus 120 may be a network device, an apparatus in a network device, or an apparatus that can be matched with the network device.

The communication apparatus 120 is configured on the network device side, and the apparatus includes:
a transceiver module 1201, configured to send first indication information to a terminal device, in which the first indication information is configured to indicate a plurality of non-continuous time units to the terminal device.

Optionally, the transceiver module 1201 is further configured to send second indication information to the terminal device, in which the second indication information is configured to indicate types of the plurality of non-continuous time units.

Optionally, the time unit is at least one of: a slot, a mini-slot, a symbol or a subframe.

Optionally, the transceiver module 1201 is further configured to perform communication transmission with the terminal device over the plurality of non-continuous time units.

Optionally, the transceiver module 1201 is specifically configured to:
in response to the plurality of non-continuous time units being uplink time units and/or flexible time units, perform PUSCH data transmission with the terminal device over the plurality of non-continuous time units;
   or,
in response to the plurality of non-continuous time units being downlink time units and/or flexible time units, perform PDSCH data transmission with the terminal device over the plurality of non-continuous time units.

Optionally, the first indication information is downlink control information DCI.

Optionally, the transceiver module 1201 is further configured to indicate to the terminal device a plurality of time intervals for the plurality of non-continuous time units through the first indication information.

Optionally, the number of the plurality of time intervals is M, and M is an integer. A first time interval is configured to indicate a time interval between a first time unit and the first indication information. An ith time interval is configured to indicate a time interval between an i-1th time unit and an ith time unit, in which i is an integer greater than 1 and less than or equal to M.

Optionally, the transceiver module 1201 is further configured to indicate to the terminal device a plurality of time intervals for a plurality of non-continuous time unit groups through the first indication information, in which each of the time unit groups includes multiple a plurality of continuous time units.

Optionally, the transceiver module 1201 is further configured to send third indication information to the terminal device, in which the third indication information is configured to indicate to the terminal device the number x of time units included in each time unit group.

Optionally, the number x of time units included in each time unit group is the same.

Optionally, the number x of time units included in each time unit group is greater than or equal to a first threshold.

Optionally, the number of the plurality of time intervals is N, and N is an integer. A first time interval is configured to indicate a time interval between a first time unit group and the first indication information. An ith time interval is configured to indicate a time interval between an i-1th time unit group and an ith time unit group, where i is an integer greater than 1 and less than or equal to N.

Optionally, the number of the plurality of non-continuous time unit groups is less than or equal to a second threshold.

Optionally, the transceiver module 1201 is further configured to indicate to the terminal device whether each time unit in a specified time unit segment is allocated to the terminal device through the first indication information, in which the specified time unit segment includes the plurality of non-continuous time units.

Optionally, the specified time unit segment includes a plurality of continuous time units, and the transceiver module is further configured to send fourth indication information to the terminal device, in which the fourth indication information is configured to indicate the number of the plurality of continuous time units.

Optionally, the number of the multiple continuous time units is less than or equal to a third threshold.

Optionally, the transceiver module 1201 is further configured to indicate to the terminal device a time interval between a first time unit in the time unit segment and the first indication information through the first indication information interval.

Optionally, the number of the plurality of non-continuous time units indicated by the first indication information is less than or equal to a fourth threshold.

In the communication apparatus provided by the present disclosure, the network device can send the first indication information to the terminal device, so that the terminal device can determine the plurality of non-continuous time units according to the first indication information. Therefore, the network device can schedule the plurality of non-continuous time units for communication transmission for the terminal device through the first indication information, thereby effectively reducing the transmission of control signaling, saving resources and improving efficiency.

Referring to FIG. 13, which is a schematic structural diagram of another communication apparatus 130 provided by an embodiment of the present disclosure. The communication apparatus 130 may be a network device, a terminal device, or a chip, a chip system or a processor that supports the network device to implement the above method, or a chip, a chip system or a chip that supports the terminal device to implement the above method. The apparatus can be configured to implement the methods described in the foregoing method embodiments, and specific reference may be made to the descriptions in the foregoing method embodiments.

The communication apparatus 130 may include one or more processors 1301. The processor 1301 may be a general-purpose processor or a special-purpose processor, or the like. For example, it may be a baseband processor or a central processing unit. The baseband processor can be configured to process communication protocols and communication data, and the central processing unit can be configured to control communication apparatuses (such as base stations, baseband chips, terminal device, terminal device chips, DU or CU, etc.), to execute computer programs and processes data in the computer programs.

Optionally, the communication apparatus 130 may further include one or more memories 1302, on which a computer program 1304 may be stored. The processor 1301 executes the computer program 1304, so that the communication apparatus 130 performs the methods described in the foregoing method embodiments. Optionally, the memory 1302 may also store data. The communication apparatus 130 and the memory 1302 can be provided separately or integrated together.

Optionally, the communication apparatus 130 may further include a transceiver 1305 and an antenna 1306. The transceiver 1305 may be referred to as a transceiver unit, a transceiver, or a transceiver circuit, etc., and is configured to implement a transceiver function. The transceiver 1305 may include a receiver and a transmitter. The receiver may be referred to as a receiving machine or a receiving circuit, etc., for implementing a receiving function. The transmitter may be referred to as a transmitter or a transmitting circuit, etc., for implementing a transmitting function.

Optionally, the communication apparatus 130 may further include one or more interface circuits 1307. The interface circuit 1307 is configured to receive code instructions and transmit them to the processor 1301. The processor 1301 executes the code instructions to cause the communication apparatus 130 to perform the methods described in the above method embodiments.

The communication apparatus 130 is a terminal device: the processor 1301 is configured to execute step 22 in FIG. 2, step 32 in FIG. 3, step 42 in FIG. 4, step 43 in FIG. 4, step 52 in FIG. 5, step 53 in FIG. 5, step 54 in FIG. 5, or step 62 in FIG. 6; the transceiver 1305 is configured to perform step 21 in FIG. 2, step 31 in FIG. 3, step 33 in FIG. 3, step 41 in FIG. 4, step 44 in FIG. 4, step 51 in FIG. 5, step 55 in FIG. 5, step 61 in FIG. 6, or step 63 in FIG. 6.

The communication apparatus 130 is a network device: the transceiver 1305 is configured to perform step 71 in FIG. 7, step 81 in FIG. 8, step 82 in FIG. 8, step 83 in FIG. 8, step 91 in FIG. 9, step 92 in FIG. 9, step 93 in FIG. 9, step 94 in FIG. 9, step 101 in FIG. 10, step 102 in FIG. 10, or step 103 in FIG. 10.

In an implementation, the processor 1301 may include a transceiver for implementing receiving and transmitting functions. For example, the transceiver may be a transceiver circuit, or an interface, or an interface circuit. Transceiver circuits, interfaces or interface circuits configured to implement receiving and transmitting functions may be separate or integrated. The above-mentioned transceiver circuits, interfaces or interface circuits can be used for reading and writing code/data, or the above-mentioned transceiver circuits, interfaces or interface circuits can be used for signal transmission or transmission.

In an implementation, the processor 1301 may store a computer program 1303, and the computer program 1303 runs on the processor 1301 to enable the communication apparatus 130 to perform the methods described in the above method embodiments. The computer program 1303 may be embodied in the processor 1301, in which case the processor 1301 may be implemented by hardware.

In an implementation, the communication apparatus 130 may include a circuit, and the circuit may implement the function of sending or receiving or communicating in the foregoing method embodiments. The processors and transceivers described in the present disclosure can be implemented in integrated circuits (ICs), analog ICs, radio frequency integrated circuits (RFICs), mixed-signal ICs, application specific integrated circuits (ASICs), printed circuit boards (PCBs), electronic equipment, etc. The processors and transceivers can also be fabricated using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus described in the above embodiments may be a network device or a terminal device, but the scope of the communication apparatus described in the present disclosure is not limited thereto, and the structure of the communication apparatus may not be limited by FIG. 13. The communication apparatus may be a stand-alone device or may be part of a larger device. For example, the communication apparatus may be:
(1) a stand-alone integrated circuit (IC), or a chip, or a chip system or a subsystem;
(2) a set of one or more ICs, which, optionally, may also include a storage component configured to store data and computer programs;
(3) an ASIC, such as Modem;
(4) a module that can be embedded in other devices;
(5) a receiver, a terminal device, an intelligent terminal device, a cellular phone, a wireless device, a handset, a mobile unit, an in-vehicle device, a network device, a cloud device, an artificial intelligence device, etc.; and
(6) others, and so forth.

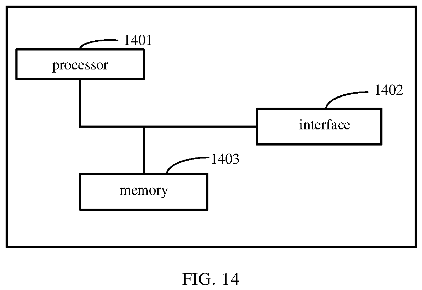

For the case that the communication apparatus may be a chip or a chip system, reference may be made to the schematic structural diagram of the chip shown in FIG. 14. The chip shown in FIG. 14 includes a processor 1401 and an interface 1402. The number of processors 1401 may be one or more, and the number of interfaces 1402 may be multiple.

For the case where the chip is configured to implement the functions of the terminal device in the embodiments of the present disclosure:
the interface 1402 is used for step 21 in FIG. 2, step 31 in FIG. 3, step 33 in FIG. 3, step 41 in FIG. 4, step 44 in FIG. 4, step 51 in FIG. 5, step 55 in FIG. 5, step 61 in FIG. 6, or step 63 in FIG. 6.

For the case where the chip is configured to implement the functions of the network device in the embodiments of the present disclosure:
the interface 1402 is configured to execute step 71 in FIG. 7, step 81 in FIG. 8, step 82 in FIG. 8, step 83 in FIG. 8, step 91 in FIG. 9, step 92 in FIG. 9, step 93 in FIG. 9, step 94 in FIG. 9, step 101 in FIG. 10, step 102 in FIG. 10, or step 103 in FIG. 10.

Optionally, the chip further includes a memory 1403 configured to store necessary computer programs and data.

Those skilled in the art can also understand that various illustrative logical blocks (illustrative logical blocks) and steps (steps) listed in the embodiments of the present disclosure may be implemented by electronic hardware, computer software, or a combination of the two. Whether such functionality is implemented in hardware or software depends on the specific application and overall system design requirements. Those skilled in the art may use various methods to implement the described functions for each specific application, but such implementation should not be construed as exceeding the protection scope of the embodiments of the present disclosure.

Embodiments of the present disclosure further provide a system for determining time domain resources. The system includes a communication apparatus serving as the terminal device in the foregoing embodiment of FIG. 11 and a communication apparatus serving as the network device in the embodiment of FIG. 12, or the system includes a communication apparatus serving as the terminal device and a communication apparatus serving as the network device in the foregoing embodiment of FIG. 13.

The present disclosure also provides a computer-readable storage medium on which instructions are stored. When the instructions are executed by a computer, the functions of any of the foregoing method embodiments are implemented.

The present disclosure also provides a computer program product. Wen the computer program product is executed by a computer, the functions of any of the above method embodiments are implemented.

In the above-mentioned embodiments, it may be implemented in whole or in part by software, hardware, firmware or any combination thereof. When implemented in software, it can be implemented in whole or in part in the form of a computer program product. The computer program product includes one or more computer programs. When the computer program is loaded and executed on a computer, all or part of the processes or functions described in the embodiments of the present disclosure are generated. The computer may be a general purpose computer, special purpose computer, computer network, or other programmable device. The computer program may be stored in or transmitted from one computer-readable storage medium to another computer-readable storage medium, for example, the computer program may be transmitted from a website site, computer, server, or data center to another website site, computer, server, or data center in a wire (e.g., a coaxial cable, an optical fiber, a digital subscriber line (DSL)) or wireless (e.g., infrared, wireless, microwave, etc.) manner. The computer-readable storage medium may be any available medium that can be accessed by a computer or a data storage device such as a server, data center, etc. that integrates one or more available media. The available media may be magnetic media (e.g., floppy disks, hard disks, magnetic tapes), optical media (e.g., high-density digital video discs (DVDs)), or semiconductor media (e.g., solid state disks, SSD)) etc.

Those of ordinary skill in the art can understand that the various numbers such as the first, the second, etc. involved in the present disclosure are only for the convenience of description, and are not configured to limit the scope of the embodiments of the present disclosure, but also indicate the sequence.

At least one in the present disclosure may also be described as one or more, and the plurality may be two, three, four or more, which is not limited by the present disclosure. In the embodiments of the present disclosure, for a technical feature, the technical feature is distinguished by "first", "second", "third", "A", "B", "C", and "D", etc. The technical features described in the "first", "second", "third", "A", "B", "C", and "D" described technical features in no order or order of magnitude.

The correspondence relationships shown in each table in the present disclosure may be configured or predefined. The values of the information in each table are only examples, and can be configured with other values, which are not limited in the present disclosure. When configuring the correspondence relationship between the information and each parameter, it is not necessarily required to configure all the correspondence relationships indicated in each table. For example, in the tables in the present disclosure, the correspondence relationships shown in some rows may not be configured. For another example, appropriate deformation adjustments can be made based on the above table, for example, splitting, merging, and so on. The names of the parameters shown in the headings in the above tables may also adopt other names that can be understood by the communication apparatus, and the values or representations of the parameters may also be other values or representations that the communication apparatus can understand. When the above tables are implemented, other data structures can also be used, such as arrays, queues, containers, stacks, linear lists, pointers, linked lists, trees, graphs, structures, classes, heaps, hash tables, or hash tables.

Predefined in the present disclosure may be understood as defined, predefined, stored, pre-stored, pre-negotiated, pre-configured, solidifier, or pre-fired.

Those skilled in the art may realize that the units and algorithm steps of each example described in conjunction with the embodiments disclosed herein can be implemented in an electronic hardware, or a combination of a computer software and an electronic hardware. Whether the functions executed by the hardware or software depends on a specific application and a design constraints of the technical solution. Those skilled in the art may implement the described functions using different methods for each particular application, but such implementations should not be considered beyond the scope of the present disclosure.

Those skilled in the art may clearly understand that, for the convenience and brevity of description, specific working processes of the above-described systems, apparatuses and units may refer to corresponding processes in the foregoing method embodiments, which will not be repeated here.

The above are only specific embodiments of the present disclosure, but the protection scope of the present disclosure is not limited thereto. Any changes or substitutions that may be easily considered by those skilled in the art within the scope of the present disclosure should be covered by the scope of protection of the disclosure. Therefore, the protection scope of the present disclosure should be subject to the protection scope of claims.

## Claims

1. A method for determining time domain resources, performed by a terminal device, comprising:
receiving first indication information, wherein the first indication information is configured to indicate a plurality of non-continuous time units; and
determining, based on the first indication information, at least one of a start position and an end position corresponding to each time unit of the plurality of non-continuous time units.

2. The method of claim 1, further comprising:
receiving second indication information, wherein the second indication information is configured to indicate types of the plurality of non-continuous time units.

3. The method of claim 2, wherein the time unit is at least one of: a slot, a mini-slot, a symbol, or a subframe.

4. The method of claim 1, further comprising:
performing communication transmission over the plurality of non-continuous time units.

5. The method of claim 4, wherein performing communication transmission over the plurality of non-continuous time units, comprises:
in response to the plurality of non-continuous time units being uplink time units and/or flexible time units, performing physical uplink shared channel PUSCH data transmission over the plurality of non-continuous time units;
or,
in response to the plurality of non-continuous time units being downlink time units and/or flexible time units, performing physical downlink shared channel (PDSCH) data transmission over the plurality of non-continuous time units.

6. The method of claim 1, wherein the first indication information is downlink control information (DCI).

7. The method of any one of claims 1-6, further comprising:
determining a plurality of time intervals for the plurality of non-continuous time units according to the first indication information.

8. The method of claim 7, wherein
the number of the plurality of time intervals is M, and M is an integer, wherein a first time interval is configured to indicate a time interval between a first time unit and the first indication information, and an ith time interval is configured to indicate a time interval between an i-1th time unit and an ith time unit, wherein i is an integer greater than 1 and less than or equal to M.

9. The method of any one of claims 1-6, further comprising:
determining a plurality of time intervals for a plurality of non-continuous time unit groups according to the first indication information, wherein each of the time unit groups comprises a plurality of continuous time units.

10. The method of claim 9, further comprising:
determining the number x of time units comprised in each time unit group according to third indication information and/or according to first pre-configured information.

11. The method of claim 10, wherein the number x of time units comprised in each time unit group is the same.

12. The method of claim 10, wherein the number x of time units comprised in each time unit group is greater than or equal to a first threshold.

13. The method of any one of claims 9-12, wherein the number of the plurality of time intervals is N, and N is an integer;
wherein a first time interval is configured to indicate a time interval between a first time unit group and the first indication information, and an ith time interval is configured to indicate a time interval between an i-1th time unit group and an ith time unit group, wherein i is an integer greater than 1 and less than or equal to N.

14. The method of claim 13, wherein the number of the plurality of non-continuous time unit groups is less than or equal to a second threshold.

15. The method of any one of claims 1-6, further comprising:
determining whether each time unit in a specified time unit segment is allocated to the terminal device according to the first indication information, wherein the specified time unit segment comprises the plurality of non-continuous time units.

16. The method of claim 15, wherein the specified time unit segment comprises a plurality of continuous time units, and the method further comprises:
determining the number of the plurality of continuous time units according to fourth indication information and/or according to second pre-configured information.

17. The method of claim 16, wherein the number of the plurality of continuous time units is less than or equal to a third threshold.

18. The method of claim 15, further comprising:
determining a time interval between a first time unit in the time unit segment and the first indication information according to the first indication information.

19. The method of any one of claims 1-18, wherein the number of the plurality of non-continuous time units indicated by the first indication information is less than or equal to a fourth threshold.

20. A method for determining time domain resources, performed by a network device, comprising:
sending first indication information, wherein the first indication information is configured to indicate a plurality of non-continuous time units.

21. The method of claim 20, further comprising:
sending second indication information, wherein the second indication information is configured to indicate types of the plurality of non-continuous time units.

22. The method of claim 21, wherein the time unit is at least one of: a slot, a mini-slot, a symbol, or a subframe.

23. The method of claim 20, further comprising:
performing communication transmission over the plurality of non-continuous time units.

24. The method of claim 23, wherein performing communication transmission over the plurality of non-continuous time units, comprises:
in response to the plurality of non-continuous time units being uplink time units and/or flexible time units, performing physical uplink shared channel PUSCH data transmission over the plurality of non-continuous time units;
or,
in response to the plurality of non-continuous time units being downlink time units and/or flexible time units, performing physical downlink shared channel PDSCH data transmission over the plurality of non-continuous time units.

25. The method of claim 20, wherein the first indication information is downlink control information DCI.

26. The method of any one of claims 20-25, further comprising:
determining a plurality of time intervals for the plurality of non-continuous time units according to the first indication information.

27. The method of claim 26, wherein
the number of the plurality of time intervals is M, and M is an integer, wherein a first time interval is configured to indicate a time interval between a first time unit and the first indication information, and an ith time interval is configured to indicate a time interval between an i-1th time unit and an ith time unit, wherein i is an integer greater than 1 and less than or equal to M.

28. The method of any one of claims 20-25, further comprising:
indicating a plurality of time intervals for a plurality of non-continuous time unit groups through the first indication information, wherein each of the time unit groups comprises a plurality of continuous time units.

29. The method of claim 28, further comprising:
sending third indication information, wherein the third indication information is configured to indicate the number x of time units comprised in each time unit group.

30. The method of claim 29, wherein the number x of time units comprised in each time unit groups is the same.

31. The method of claim 29, wherein the number x of time units comprised in each time unit group is greater than or equal to a first threshold.

32. The method of any one of claims 28-31, wherein the number of the plurality of time intervals is N, and N is an integer;
wherein a first time interval is configured to indicate a time interval between a first time unit group and the first indication information, and an ith time interval is configured to indicate a time interval between an i-1th time unit group and an ith time unit group, wherein i is an integer greater than 1 and less than or equal to N.

33. The method of claim 32, wherein the number of the plurality of non-continuous time unit groups is less than or equal to a second threshold.

34. The method of any one of claims 20-25, further comprising:
indicating whether each time unit in a specified time unit segment is allocated to a terminal device through the first indication information, wherein the specified time unit segment comprises the plurality of non-continuous time units.

35. The method of claim 34, the specified time unit segment comprises a plurality of continuous time units, and the method further comprises:
sending fourth indication information, wherein the fourth indication information is configured to indicate the number of the plurality of continuous time units.

36. The method of claim 35, wherein the number of the plurality of continuous time units is less than or equal to a third threshold.

37. The method of claim 34, further comprising:
indicating a time interval between a first time unit in the time unit segment and the first indication information through the first indication information.

38. The method of any one of claims 20-28, wherein the number of plurality of non-continuous time units indicated by the first indication information is less than or equal to a fourth threshold.

39. A communication apparatus, configured in a terminal device, comprising:
a transceiver module, configured to receive first indication information, wherein the first indication information is configured to indicate a plurality of non-continuous time units; and
a processing module, configured to determine at least one of a start position and an end position corresponding to each time unit of the plurality of non-continuous time units based on the first indication information.

40. A communication apparatus, configured in a network device, comprising:
a transceiver module, configured to send first indication information, wherein the first indication information is configured to indicate a plurality of non-continuous time units.

41. A communication apparatus, comprising a processor and a memory, wherein a computer program is stored in the memory, and the processor executes the computer program stored in the memory, to cause the apparatus to execute the method of any one of claims 1 to 19.

42. A communication apparatus, comprising a processor and a memory, wherein a computer program is stored in the memory, and the processor executes the computer program stored in the memory, to cause the device to execute the method as claimed in the claims The method of any one of 20 to 38.

43. A communication apparatus, comprising a processor and an interface circuit;
wherein the interface circuit is configured to receive code instructions and transmitting them to the processor; and
the processor is configured to execute the code instructions to perform the method of any one of claims 1 to 19.

44. A communication apparatus, comprising a processor and an interface circuit;
wherein the interface circuit is configured to receive code instructions and transmitting them to the processor; and
the processor is configured to execute the code instructions to perform the method of any one of claims 20 to 38.

45. A computer-readable storage medium, configured to store instructions, wherein when the instructions are executed, the method of any one of claims 1 to 19 is implemented.

46. A computer-readable storage medium, configured to store instructions, wherein when the instructions are executed, the method of any one of claims 20 to 38 is implemented.
